# EUROPEAN PATENT SPECIFICATION

(11) **EP 3 297 898 B1**
(45) Date of publication and mention of the grant of the patent: **01.07.2020**
(21) Application number: 16724192.6
(22) Date of filing: 03.05.2016
(51) Int. Cl.: B62D 55/21

(54) **CHAIN ASSEMBLY HAVING A RETENTION FEATURE**
KETTENANORDNUNG MIT HALTEEINRICHTUNG
ENSEMBLE CHAÎNE MUNI D'UN ÉLÉMENT DE RETENUE

(30) Priority: 21.05.2015 US 201514718708
(43) Date of publication of application: 28.03.2018
(73) Proprietor: Caterpillar Inc., Deerfield, Illinois 60015 (US)
(72) Inventor: BROOKS, Jennifer A., Germantown Hills, IL 61548 (US); RECKER, Roger L., Dunlap, IL 61525 (US)
(74) Representative: BRP Renaud & Partner mbB Rechtsanwälte Patentanwälte Steuerberater
(86) International application number: PCT/US2016/030521
(87) International publication number: WO 2016/186824

(56) References cited:
- WO-A1-81/00545
- WO-A1-2008/076197
- US-A- 5 257 858
- US-A1- 2001 003 895
- US-A1- 2013 000 995

## Description

### Technical Field

The present disclosure relates generally to a chain assembly and, more particularly, to a chain assembly having a retention feature.

### Background

A mobile machine may be used to perform various types of work on different worksites, such as a construction site, a demolition site, a mining site, or a landfill site. For example, a bulldozer may be used to push soil and rock on a construction site. Some of these mobile machines are track-type machines that include a tracked undercarriage with tracks on the left and right sides of the machine. Each of the tracks includes a chain formed by sequentially connecting pairs of track links to one another using a track link connector. For example, a pin may be inserted through a pair of aligned bores in adjacent track links and secured in place (e.g., via press-fitting) to attach the track links to each other.

During operation, the track link connectors may gradually move axially within the track link bores, potentially weakening the chain assembly. In order to help prevent such movement, the track link connectors may include a retention feature, such as a roughened surface at the location where the track link connector contacts a corresponding track link. The roughened surface increases a retention force at the track link joints, thereby resisting axial movement of the track link connector relative to the track link.

WO 2008/076197 A1 discloses a machine with a first machine component with a first bore and a second machine component being retained within said bore by a press fit. The second machine component includes a nondirectional surface finish to form a fluid seal and a directional surface finish to inhabit removal via the press fit.

The track link connector in US 2013/0000995 A1 comprises an elongated cylindrical body with a textured region extending less than 360 degrees around a circumference of a surface in at least one end portion of the body.

US 5 257 858 A1 discloses a track link connector and a track pin wherein joint retention means prevent axial end moving between the track link and the track pin. The joint retention means include a retained cavity and a soft metal retention ring.

US 2001/003895 A1 shows a method and apparatus of assembling a joint of an endless track chain for track-type machines. The apparatus includes grooves about the end portions of a track pin. At least one mechanically formed nodule protrudes from a side surface of a pin boss into respective ones of the grooves.

The joint connections of a link assembly for a track type in WO 81/00545 A1 disclose track joint locking means for interengaging an outer surface of a pin with an inner surface of a collar. The locking means are formed as hyperboloid-shaped surfaces.

An example of a track link connector that includes a roughened surface is disclosed in U.S. Patent Application Publication No. 2013/0000995 by Dumitru et al., published on January 3, 2013 ("the '995 publication"). The track link connector of the '995 publication includes a pin with several circumferentially spaced textured regions. The textured regions extend an entire width of an interface between the pin and a track link. The textured regions resist movement of the pin out of a corresponding track link bore.

There may be potential drawbacks to using a roughened surface as a retention feature, however. For example, in tractor undercarriage applications, where lubricant sealing at a track link joint is a priority, a roughened track link connector surface may create a leakage path for lubricant. These issues are balanced with the need for a retention feature that provides a retention force sufficient to secure the track links in place over long periods of time and repeated use.

The present disclosure is directed at overcoming one or more of the shortcomings set forth above and/or other problems of the prior art.

### Summary of the Disclosure

According to a first aspect, the present invention is directed to a chain assembly for a mobile machine. The chain assembly includes a first track link including a first bore at an inner track link portion, a second track link including a second bore at an outer track link portion, and a track link connector. The track link connector includes an elongate, substantially cylindrical body having a length dimension and including a substantially annular exterior surface and first and second opposing end portions. The first end portion is inserted into the first and second bores and forms an interface between the first end portion and the second bore. The interface includes an axial length. The track link connector further includes a retention feature extending 360 degrees around a circumference of the exterior surface of the body at the interface, the retention feature being a roughened surface. The retention feature 1 is located only at a first portion of the interface that makes up approximately 5-80% of the axial length of the interface. The interface includes a second portion that makes up approximately 20-95% of the axial length of the interface. A sealing feature is located only at the second portion of the interface. Further, the first portion is closer than the second portion to a center of the cylindrical body.

According to a second aspect, the invention is directed to another chain assembly for a mobile machine. The chain assembly includes a first track link including a first bore at an inner track link portion, a second track link including a second bore at an outer track link portion, and a track link connector. The track link connector includes an elongate, substantially cylindrical body having a length dimension and including a substantially annular exterior surface and first and second opposing end portions. The first end portion is inserted into the first and second bores and forms an interface between the first end portion and the second bore. The interface includes an axial length. The track link connector further includes a retention feature extending 360 degrees around a circumference of the exterior surface of the body at the interface. The track link connector also includes a sealing feature extending 360 degrees around a circumference of the exterior surface of the body at the interface. The retention feature covers a first portion of the interface and the sealing feature covers a second portion of the interface. The first portion is closer than the second portion to a center of the cylindrical body and the cylindrical body includes a constant diameter that covers the first portion and the second portion.

Further preferred embodiments of the invention are covered by the dependent claims.

### Brief Description of the Drawings

Fig. 1 illustrates a mobile machine having a track assembly;
Fig. 2 illustrates a portion of an exemplary chain assembly of the track assembly of Fig. 1;
Fig. 3 illustrates a cross-sectional view of the chain assembly of Fig. 2; and
Fig. 4 illustrates an exemplary track link connector of the chain assembly of Figs. 2-3.

### Detailed Description

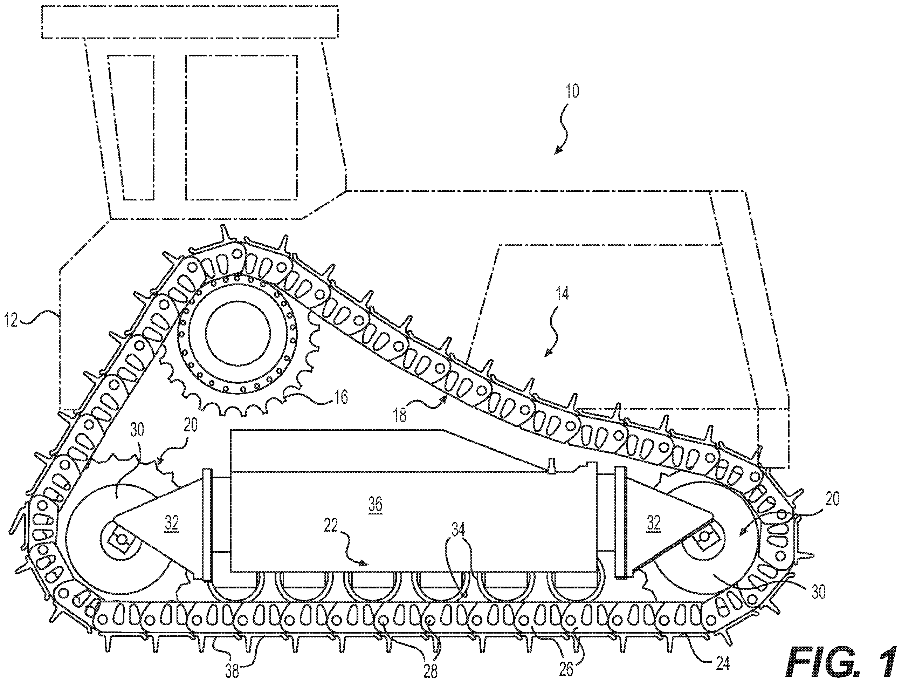

Fig. 1 illustrates an exemplary track-type machine 10, consistent with disclosed embodiments. Track-type machine 10 may embody any machine that is driven, propelled, positioned, and/or maneuvered by operating a "continuous" track-type traction device. Such machines may include, for example, track-type tractors, skid steers, dozers, excavators, backhoes, track loaders, front shovels, rope shovels, or any other type of track-maneuverable machine. Machine 10 may include a frame 12 and a pair of track assemblies 14 (only one shown) secured to frame 12 on opposing sides of machine 10. Track assembly 14 may include a drive sprocket 16 coupled to a driving mechanism (not shown), and a chain assembly 18 operatively coupled to the driving mechanism by drive sprocket 16 and configured to propel machine 10.

The driving mechanism may include one or more components configured to generate a torque output. For example, the driving mechanism may include any suitable type of internal combustion engine, such as a gasoline, diesel, natural gas, or hybrid-powered engine or turbine. Alternatively or additionally, the driving mechanism may embody an electric motor, electrically coupled to an electric power source and configured to convert at least a portion of the electrical energy from the electric power output into mechanical energy. According to yet another embodiment, the driving mechanism may include a hydraulic motor fluidly coupled to a hydraulic pump and configured to convert a fluid pressurized by the pump into a torque output.

Drive sprocket 16 may be coupled to the driving mechanism via a shaft, which may provide an interface for delivering torque generated by the driving mechanism to drive sprocket 16. For example, drive sprocket 16 may be secured (e.g., welded, bolted, heat-coupled, etc.) to a hub associated with a shaft, so that drive sprocket 16 rotates in response to the torque generated by the driving mechanism. In some embodiments, drive sprocket 16 may be directly coupled via a drive shaft to the driving mechanism. Alternatively, drive sprocket 16 may be coupled to the driving mechanism via a torque converter (such as a gearbox, transmission, etc.), so that rotation of drive sprocket 16 is proportional to the torque generated by the driving mechanism.

Track assembly 14 may include a plurality of components that form the "continuous" track, ground-engaging portion of the drive system of machine 10. Track assembly 14 may include, among other things, drive sprocket 16, chain assembly 18, at least one idler assembly 20, a roller assembly 22, and a traction assembly 24. However, it should be understood that these components of track assembly 14 are exemplary only and not intended to be limiting. Accordingly, track assembly 14 may include additional and/or different components than those listed above.

Chain assembly 18 may form a continuous chain connected around outer portions of drive sprocket 16, idler assemblies 20, and roller assembly 22. As used herein, a "chain assembly" may be a completed chain of track links 26 and track link connectors 28 or a chain module that includes at least one track link 26 and at least one track link connector 28 and is configured to be secured to other modules or components to complete the chain. Traction assembly 24 may be connected to an outer portion of chain assembly 18 and configured to engage a ground surface beneath track-type machine 10. In use, rotation of drive sprocket 16 may cause chain assembly 18 to move around drive sprocket 16, idler assemblies 20, and roller assembly 22, causing traction assembly 24 to engage the ground and thereby propel track-type machine 10 in a manner known in the art.

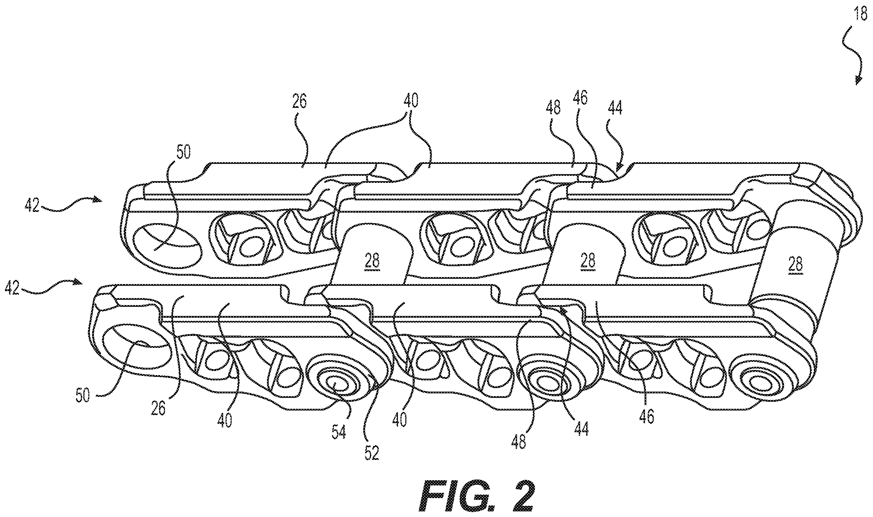

In an exemplary embodiment, chain assembly 18 may include a plurality of interconnected track links 26. It should be understood that "track link," as used herein, refers to any linkage component of a continuous chain for a track-type machine, and is not limited to track links 26 described herein. In one embodiment, adjacent (e.g., consecutive) track links 26 may be coupled together via a plurality of track link connectors 28. Track link connectors 28 may include a track pin assembly, which includes a track pin and may optionally include seals, bearings, bushings, and/or other structures. In an exemplary embodiment, chain assembly 18 may include two parallel sets of track links, connected to each other by track link connectors 28 (shown in Fig. 2).

Idler assemblies 20 may include components configured to guide chain assembly 18 as it moves around track assembly 14. For example, each idler assembly 20 may include an idler 30 and a mount 32. Idlers 30 may include features configured to engage chain assembly 18. For example, idlers 30 may include engagement surfaces configured to contact and guide track links 26 as they pass around idler 30. In some embodiments (such as idler 30 shown in Fig. 1), idler 30 may include idler teeth (e.g., between the engagement surfaces) configured to engage track link connectors 28. In other embodiments, the engagement surfaces may be separated by a flange. Each mount 32 may secure idler 30 in place on machine 10 through connection to frame 12.

Roller assembly 22 may also include components configured to guide chain assembly 18. For example, roller assembly 22 may include a plurality of rollers 34 and a roller frame 36. Roller frame 36 may be mounted to frame 12 of machine 10. Rollers 34 may guide chain assembly 18 at a lower side of roller frame 36. Rollers 34 may each be suspended from roller frame 36. For example, each of rollers 34 may be rotationally supported on an axle suspended below roller frame 36. Rollers 34 may ride on and guide track links 26 as they pass under roller frame 36.

Traction assembly 24 may include a plurality of track shoes 38 carried by chain assembly 18. In some embodiment, track shoes 38 may be separate from chain assembly 18 and include a connecting portion configured to be secured to one or more track links 26 and a ground engaging portion configured to contact the ground. In other embodiments, individual track shoes 38 and track links 26 may be integrally formed as one piece. The ground engaging portion may include one or more features (e.g., grouser bars) that provide increased traction between track shoes 38 and the ground. It should be understood, however, that the disclosed embodiments may be used with any type of track shoe forming a part of a track assembly used by a track-type mobile machine. In other embodiments, track shoes 38 may be omitted entirely from track assembly 14, so that surfaces of track links 26 that would otherwise contact track shoes 38 may contact the ground surface under machine 10.

Fig. 2 further illustrates a portion of chain assembly 18. Chain assembly 18 may include a plurality of track links 26 interconnected by track link connectors 28. Each track link 26 may include an engagement surface 40. Track links 26 are arranged such that aligned engagement surfaces 40 form parallel tracks 42 separated by track link connectors 28. The parallel tracks 42 formed by engagement surfaces 40 may contact corresponding engagement surfaces of drive sprocket 16, idler assemblies 20, and roller assembly 22 as each associated track link 26 moves around track assembly 14.

In order to form the continuous parallel tracks 42, each track link 26 may be configured to sequentially connect to an adjacent other track link 26 at a track link joint 44. At each track link joint 44, a track link connector 28 may connect an inner track link portion 46 of a first track link 26 to an outer track link portion 48 of a second track link 26. As shown in Fig. 2, each track link 26 may be configured such that a first end of the track link 26 includes an inner track link portion 46 and a second end of the same track link 26 includes an outer track link portion 48. In this way, similarly shaped track links 26 may be sequentially connected to each other to form the parallel tracks 42. It should be understood, however, that other configurations are possible. For example, track links 26 may be configured such that some track links 26 include only inner track link portions 46 at both ends and other track links 26 include only outer track link portions 48 at both ends.

In an exemplary embodiment, each track link 26 may include a pair of bores 50, 52. For example, each track link 26 may include a bore 50 at the inner track link portion 46 and a bore 52 at the outer track link portion 48 thereof In order to secure a first track link 26 to a second track link 26, bore 50 at the inner track link portion 46 of the first track link 26 may be aligned with bore 52 at the outer track link portion 48 of the second track link 26. Track link connector 28 (e.g., a pin) may be inserted through aligned bores 50, 52 and secured in place to attach the track links 26 together. For example, track link connector 28 may be press fit within at least bore 52 such that a fixed connection is created. This process may be repeated on an opposite side of track link connector 28 with two other track links 26 and at opposite ends of the track links 26 to create the continuous, parallel tracks 42 of chain assembly 18.

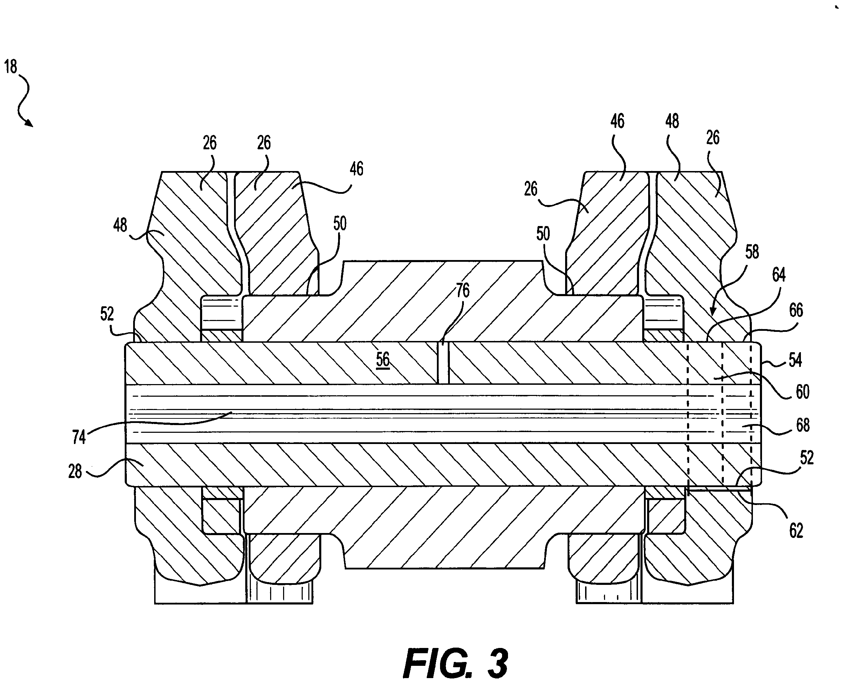

Fig. 3 depicts a cross-sectional view of chain assembly 18 including a track link connector 28 that connects two pairs of track links 26 at corresponding track link joints 44. Each track link joint 44 includes a first track link 26 with an inner track link portion 46 secured to an outer track link portion 48 of a second track link 26. At each track link joint 44 a first end portion 54 of track link connector 28 may be fit (e.g., via press fitting or otherwise creating an interference fit, etc.) into bore 52 of a track link 26 such that track link connector 28 is fixedly attached thereto at an interface 58. An inward portion 56 of track link connector 28 may extend through bore 50 and be secured thereto to connect the pair of track links 26 to each other (e.g., inner track link portion 46 to outer track link portion 48). For example, a bushing may surround inward portion 56 (and secured thereto) and be inserted into bore 50. It should be understood, however, that other mechanisms for securing inner track link portions 46 may be used (e.g., fitting bore 50 directly to track link connector 28 or via bearings, seals, etc.).

In a preferred embodiment, track link connector 28 includes fluid reservoir 74 formed therein. For example, fluid reservoir 74 may be formed by a hollow interior of track link connector 28 which is configured to retain a fluid. Fluid reservoir 74 may be enclosed (e.g., open ends of track link connector 28 plugged) except for one or more channels 76 that lead to an exterior of track link connector 28. Channel 76 may provide an outlet for fluid (e.g., lubricant, oil, etc.) held in fluid reservoir 74 to reach an exterior surface of track link connector 28 and thereby lubricate track link joint 44. For example, fluid may travel through channel 76 to an area between track link connector 28 and a bushing, thereby providing a lubricated interface that helps to inhibit wear. In some embodiments of track assembly 14, fluid reservoir 74 may serve as a sole source of lubricant for an associated track link joint 44. Therefore, preventing leakage of the lubricant and allowing the fluid to be slowly metered through channel 76 may be a priority for track assemblies 14 that implement track link connectors that are configured in this way.

Track link connector 28 includes a retention feature 60 at interface 58. Retention feature 60 is configured to help retain track link connector 28 within bore 52. According to a first aspect of the invention, retention feature 60 is a roughened surface on an exterior of track link connector 28. As used herein a "roughened surface" includes a surface that includes a surface roughness that is greater than a surface roughness of an otherwise substantially smooth surface. For example, retention feature 60 may be a knurled surface. However, it should be understood that a roughened surface could be formed in other ways, and that the roughened surface is not necessarily formed through a "roughening" process. For example, a component that includes a roughened surface may be manufactured in a manner that results in a roughened surface, regardless of whether a corresponding surface thereof is treated in any way.

Retention feature 60 may increase a retention force between track link connector 28 and track link 26 such that it causes track link connector 28 to resist axial movement with respect to the connected track link 26. Further, a symmetrical configuration of retention feature 60 may allow retention feature 60 to resist axial movement in two directions (e.g., both axial directions) approximately equally. For example, the roughened surface may create multiple points of contact between track link connector 28 and an inside of bore 52 such that track link connector 28 digs into the inside surface of track link 26, thereby increasing the coefficient of static friction that resists axial movement of track link connector 28.

Interface 58 includes an axial length 62. For example, axial length 62 may be equal to an axial length of bore 52. Retention feature 60 covers (e.g., extend only at) a portion of axial length 62 of interface 58. For example, retention feature 60 covers a first portion 64 of interface 58, while track link connector 28 may include another feature that covers a second portion 66 of interface 58.

Track link connector 28 includes a sealing feature 68 that covers (e.g., extends only at) a second portion 66 of interface 58. In some embodiments, retention feature 60, being a roughened surface, may create a leak path for fluid to flow toward second portion 66. Sealing feature 68 is configured to seal fluid that travels in the leak path, in order to prevent leakage of fluid out of track joint 44. For example, sealing feature 68 may be configured to inhibit fluid held in fluid reservoir 74 from leaking from track link joint 44 via a path through interface 58. In some embodiments, sealing feature 68 may be a smooth surface of track link connector 28. The smooth surface, when press fit to bore 52, helps to prevent any leak paths created by retention feature 60 from continuing toward end portion 54 and out of bore 52.

In an exemplary embodiment, first portion 64 may make up approximately 5-80% of axial length 62 of interface 58, and second portion 66 may make up approximately 20-95% of axial length 62 of interface 58 (e.g., a remainder of axial length 62 that is not first portion 64). In another example, first portion 64 may make up approximately 25-50% of axial length 62 of interface 58 and second portion may make up 50-75% of axial length 62 of interface 58. These exemplary dimensions have been found to provide a sufficient retention force to interface 58, while allowing sufficient space for track link connector 28 to create a seal to inhibit fluid from leaking.

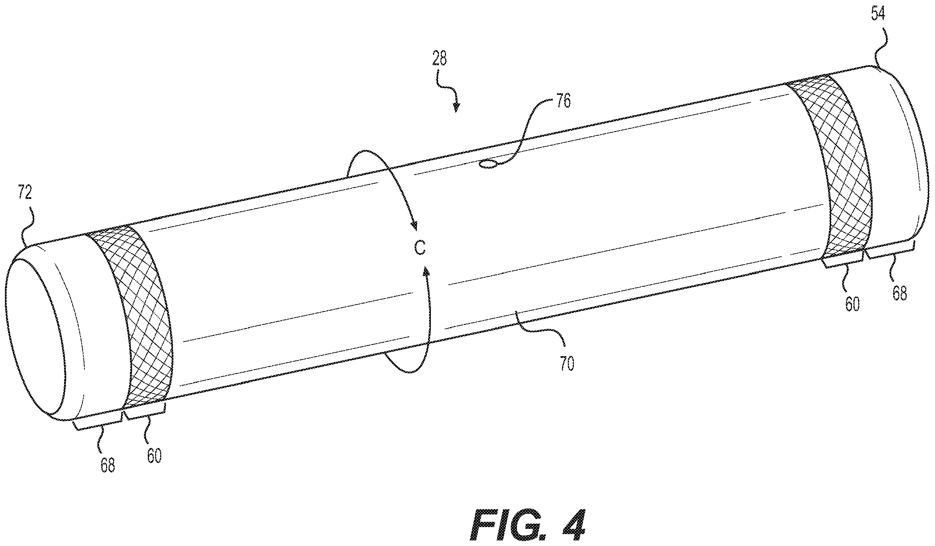

Fig. 4 depicts an exemplary track link connector 28. While track link connector 28 is shown as a track pin, it should be understood that track link connector 28 may be a track pin assembly that includes additional components and/or features, such as bearings, bushings, etc. Track link connector 2 includes an elongate, substantially cylindrical body 70 having a length dimension and including a substantially annular exterior surface extending between first end portion 54 and an opposing second end portion 72. Each end portion 54, 72 may include retention feature 60 and sealing feature 68.

Retention feature 60 extends inward of sealing feature 68 such that, when an end portion 54, 72 is fit into a bore 52, sealing feature 68 is outward of retention feature 60 to help prevent fluid leakage. In other words, retention feature 60 may be closer than sealing feature 68 to a center of cylindrical body 70 (e.g., a center point of an axial length of cylindrical body 70). Further, in some embodiments, retention feature 60 may be located on an interior surface of bore 52 in addition to retention feature 60 on track link connector 28. For example, retention feature 60 may include a roughened surface on an interior surface of track link 26 surrounding bore 52. The retention feature 60 (e.g., the roughened surface) extends 360 degrees around interface 58 by being located on an exterior surface of cylindrical body 70, or in addition an interior surface surrounding bore 52.

The dimensions of retention feature 60 and sealing feature 68 may be configured to correspond to the exemplary dimensions of the first and second portions 64, 66 of interface 58 According to a first aspect and a second aspect of the invention, a combined width of retention feature 60 and sealing feature 68, retention feature 60 may make up approximately 5-80% (or, more particularly, 25-50%) thereof, while sealing feature 68 makes up 20-95% thereof (e.g., the remainder). Moreover, according to a second aspect of the invention, cylindrical body 70 includes a constant diameter that covers retention feature 60 and sealing feature 68.

According to a first aspect and to a second aspect of the invention, retention feature extends 360 degrees around a circumference C of the exterior surface of body, and according to a first aspect of the incention, sealing feature also extends 360 degrees around the circumference C. As discussed herein, these dimensions have been found to balance increased retention force with sufficient sealing properties for track link joint 44.

### Industrial Applicability

The disclosed track link connector allows for improved retention of a track link joint without sacrificing sealing properties that keep fluid from leaking out of the track link joint. The disclosed configurations may be particularly applicable to certain tractor undercarriages where sealing of lubricant is a priority, but interfaces of track link joints are relatively short (and thus may be susceptible to axial movement of the track link connector). For example, in instances where a track link connector may include only a limited supply of lubricant (e.g., an amount of fluid held in a fluid reservoir therein), the disclosed track link connector is particularly suited to inhibit leakage of that fluid while also providing desired retention properties.

Retention feature 60 may be added to a track link connector 28 through a roughening process, such as knurling at the corresponding area. Sealing feature 68 may be formed by polishing or otherwise ensuring a smooth exterior surface of track link connector 28 at a corresponding area. During assembly of chain assembly 18, a track link connector 28 may be installed by press fitting (or otherwise interference fitting) an end portion (e.g., 54 or 72) thereof into a bore 52. Retention feature 60, being a roughened surface, allows track link connector 28 to be press fit to bore 52 from either of two directions (e.g., through either opening into bore 52). The roughened surface may dig into the interior surface of track link 26 at bore 52, thereby increasing a coefficient of static friction and increasing a retention strength at track link joint 44.

Extending the retention feature 360 degrees around a circumference of a track link connector, but not an entire axial length of the interface, creates an efficient balance between retention properties and sealing properties for the disclosed track link connector and corresponding track link joints of a chain assembly. Further, the roughened surface, being generally symmetrical, helps to inhibit axial movement of the track link connector in two directions approximately equally. In addition, utilizing a track link connector that includes a constant diameter between two different portions (e.g., retention feature and sealing feature) allows the track link connector to be inserted into a bore with a constant diameter without irreversibly deforming the track link connector or bore. This may allow the track link connector and/or the associated track link to be reused and/or more easily remanufactured. The disclosed features in combination allow for the manufacturing of a strong, durable chain assembly for a mobile machine that experiences heavy use.

It will be apparent to those skilled in the art that various modifications and variations can be made to the disclosed chain assembly having a retention feature. Other embodiments will be apparent to those skilled in the art from consideration of the specification and practice of the disclosed chain assembly having a retention feature.

## Claims

1. A chain assembly (18) for a track-type machine (10), comprising:
a first track link (26) including a first bore (50) at an inner track link portion (46);
a second track link (26) including a second bore (52) at an outer track link portion (48);
a track link connector (28) including an elongate, substantially cylindrical body (70) having a length dimension and including a substantially annular exterior surface and first and second opposing end portions (54, 72), the first end portion being inserted into the first and second bores and forming an interface (58) between the first end portion and the second bore, the interface between the first end portion and the second bore having an axial length (62); and
a retention feature (60) extending 360 degrees around a circumference of the exterior surface of the body at the interface, the retention feature being a roughened surface,
wherein the retention feature is located only at a first portion (64) of the interface that makes up approximately 5-80% of the axial length of the interface,
wherein the interface includes a second portion (66) that makes up approximately 20-95% of the axial length of the interface,
wherein the first portion (64) is closer than the second portion to a center of the cylindrical body, **characterized in that** a sealing feature (68) is located only at the second portion (66) of the interface (58).

2. The chain assembly of claim 1, wherein the retention feature is a knurled surface.

3. The chain assembly of claim 1, wherein the retention feature is configured to generate a retention force at the interface to cause the track link connector to resist axial movement with respect to the second track link.

4. The chain assembly of claim 3, wherein the retention feature is configured to cause the track link connector to resist axial movement with respect to the second track link approximately equally in two directions.

5. A chain assembly (18) for a mobile machine (10), comprising:
a first track link (26) including a first bore (50) at an inner track link portion (46);
a second track link (26) including a second bore (52) at an outer track link portion (48);
a track link connector (28) including an elongate, substantially cylindrical body (70) having a length dimension and including a substantially annular exterior surface and first and second opposing end portions (54, 72), the first end portion being inserted into the first and second bores and forming a generally annular interface (58) between the first end portion and the second bore, the interface between the first end portion and the second bore having an axial length (62);
a retention feature (60) extending 360 degrees around the interface; and
a sealing feature (68) extending 360 degrees around the interface;
wherein the retention feature covers a first portion (64) of the axial length of the interface,
wherein the sealing feature covers a second portion (66) of the axial length of the interface, and
wherein the cylindrical body includes a constant diameter that covers the first portion and the second portion, **characterized in that** the first portion (64) is closer than the second portion (66) to a center of the cylindrical body (70).

6. The chain assembly of claim 5, wherein the retention feature is a roughened surface.

7. The chain assembly of claim 6, wherein the sealing feature is a smooth surface.

8. The chain assembly of claim 5, wherein the track link connector further includes a fluid reservoir (74) formed therein.

9. The chain assembly of claim 8, wherein the sealing feature is configured to inhibit fluid from the fluid reservoir from leaking through the interface.

## Patentansprüche

1. Ketteanordnung (18) für eine Maschine vom Raupentyp (10), umfassend:
ein erstes Kettenglied (26) mit einer ersten Bohrung (50) an einem inneren Kettengliedabschnitt (46);
ein zweites Kettenglied (26) mit einer zweiten Bohrung (52) an einem äußeren Kettengliedabschnitt (48);
einen Kettengliedverbinder (28) mit einem länglichen, im Wesentlichen zylindrischen Körper (70), der eine Längenabmessung aufweist und eine im Wesentlichen ringförmige Außenfläche und einen ersten und einen zweiten Endabschnitt (54, 72) einschließt, die einander gegenüberliegen, wobei der erste Endabschnitt in die erste und die zweite Bohrung eingeführt wird und eine Grenzfläche (58) zwischen dem ersten Endabschnitt und der zweiten Bohrung bildet, wobei die Grenzfläche zwischen dem ersten Endabschnitt und der zweiten Bohrung eine axiale Länge (62) aufweist; und
eine Halteeinrichtung (60), die sich 360 Grad um einen Umfang der Außenfläche des Körpers an der Grenzfläche erstreckt, wobei die Halteeinrichtung eine aufgeraute Oberfläche ist,
wobei die Halteeinrichtung nur an einem ersten Abschnitt (64) der Grenzfläche angeordnet ist, der etwa 5-80 % der axialen Länge der Schnittstelle ausmacht,
wobei die Grenzfläche einen zweiten Abschnitt (66) einschließt, der etwa 20-95 % der axialen Länge der Grenzfläche ausmacht,
wobei der erste Abschnitt (64) näher als der zweite Abschnitt an einer Mitte des zylindrischen Körpers liegt. **dadurch gekennzeichnet, dass** sich eine Abdichtungseinrichtung (68) nur an dem zweiten Abschnitt (66) der Grenzfläche (58) befindet.

2. Kettenanordnung nach Anspruch 1, wobei die Halteeinrichtung eine gerändelte Oberfläche ist.

3. Kettenanordnung nach Anspruch 1, wobei die Halteeinrichtung so konfiguriert ist, dass sie eine Haltekraft an der Grenzfläche erzeugt, um zu bewirken, dass der Kettengliedverbinder einer axialen Bewegung in Bezug auf das zweite Kettenglied widersteht.

4. Kettenanordnung nach Anspruch 3, wobei die Halteeinrichtung so konfiguriert ist, dass der Kettengliedverbinder einer axialen Bewegung in Bezug auf das zweite Kettenglied etwa gleichmäßig in zwei Richtungen widersteht.

5. Ketteanordnung (18) für eine mobile Maschine (10), umfassend:
ein erstes Kettenglied (26) mit einer ersten Bohrung (50) an einem inneren Kettengliedabschnitt (46);
ein zweites Kettenglied (26) mit einer zweiten Bohrung (52) an einem äußeren Kettengliedabschnitt (48);
einen Kettengliedverbinder (28) mit einem länglichen, im Wesentlichen zylindrischen Körper (70), der eine Längenabmessung aufweist und eine im Wesentlichen ringförmige Außenfläche und einen ersten und einen zweiten Endabschnitt (554, 72) einschließt, die einander gegenüberliegen, wobei der erste Endabschnitt in die erste und die zweite Bohrung eingeführt wird und eine im Allgemeinen ringförmige Grenzfläche (58) zwischen dem ersten Endabschnitt und der zweiten Bohrung bildet, wobei die Grenzfläche zwischen dem ersten Endabschnitt und der zweiten Bohrung eine axiale Länge (62) aufweist;
eine Halteeinrichtung (60), die sich 360 Grad um die Grenzfläche herum erstreckt; und
eine Abdichtungseinrichtung (68), die sich 360 Grad um die Grenzfläche herum erstreckt;
wobei die Halteeinrichtung einen ersten Abschnitt (64) der axialen Länge der Grenzfläche abdeckt,
wobei die Abdichtungseinrichtung einen zweiten Abschnitt (66) der axialen Länge der Grenzfläche abdeckt, und
wobei der zylindrische Körper einen konstanten Durchmesser aufweist, der den ersten Abschnitt und den zweiten Abschnitt abdeckt, **dadurch gekennzeichnet, dass** der erste Abschnitt (64) näher als der zweite Abschnitt (66) an einer Mitte des zylindrischen Körpers (70) liegt.

6. Kettenanordnung nach Anspruch 5, wobei die Halteeinrichtung eine aufgeraute Oberfläche ist.

7. Ketteanordnung nach Anspruch 6, wobei die Abdichtungseinrichtung eine glatte Oberfläche ist.

8. Kettenanordnung nach Anspruch 5, wobei der Kettengliedverbinder ferner ein darin ausgebildetes Fluidreservoir (74) einschließt.

9. Kettenanordnung nach Anspruch 8, wobei die Abdichtungseinrichtung so konfiguriert ist, dass ein Auslaufen von Fluid aus dem Fluidreservoir durch die Grenzfläche verhindert wird.

## Revendications

1. Ensemble chaîne (18) pour une machine de type à chenille (10), comprenant :
un premier maillon de chenille (26) incluant un premier alésage (50) au niveau d'une partie interne de maillon de chenille (46) ;
un deuxième maillon de chenille (26) incluant un deuxième alésage (52) au niveau d'une partie externe de maillon de chenille (48) ;
un raccord de maillon de chenille (28) incluant un corps allongé, sensiblement cylindrique (70) ayant une dimension de longueur et incluant une surface extérieure sensiblement annulaire et des première et deuxième parties d'extrémité opposées (54, 72), la première partie d'extrémité étant insérée dans les premier et deuxième alésages et formant une interface (58) entre la première partie d'extrémité et le deuxième alésage, l'interface entre la première partie d'extrémité et le deuxième alésage ayant une longueur axiale (62) ; et
un élément de retenue (60) s'étendant sur 360 degrés autour d'une circonférence de la surface extérieure du corps au niveau de l'interface, l'élément de retenue étant une surface rugueuse,
dans lequel l'élément de retenue est situé uniquement au niveau d'une première partie (64) de l'interface, qui constitue approximativement 5 à 80 % de la longueur axiale de l'interface,
dans lequel l'interface inclut une deuxième partie (66) qui constitue approximativement 20 à 95 % de la longueur axiale de l'interface,
dans lequel la première partie (64) est plus proche que la deuxième partie d'un centre du corps cylindrique **caractérisé en ce qu'**un élément d'étanchéité (68) est situé uniquement au niveau de la deuxième partie (66) de l'interface (58).

2. Ensemble chaîne selon la revendication 1, dans lequel l'élément de retenue est une surface moletée.

3. Ensemble chaîne selon la revendication 1, dans lequel l'élément de retenue est configuré pour générer une force de retenue au niveau de l'interface pour amener le raccord le maillon de chenille à résister au mouvement axial par rapport au deuxième maillon de chenille.

4. Ensemble chaîne selon la revendication 3, dans lequel l'élément de retenue est configuré pour amener le raccord de maillon de chenille à résister au mouvement axial par rapport au deuxième maillon de chenille de manière approximativement égale dans deux directions.

5. Ensemble chaîne (18) pour une machine mobile (10), comprenant :
un premier maillon de chenille (26) incluant un premier alésage (50) au niveau d'une partie interne de maillon de chenille (46) ;
un deuxième maillon de chenille (26) incluant un deuxième alésage (52) au niveau d'une partie externe de maillon de chenille (48) ;
un raccord de maillon de chenille (28) incluant un corps allongé, sensiblement cylindrique (70) ayant une dimension de longueur et incluant une surface extérieure sensiblement annulaire et des première et deuxième parties d'extrémité opposées (554, 72), la première partie d'extrémité étant insérée dans les premier et deuxième alésages et formant une interface généralement annulaire (58) entre la première partie d'extrémité et le deuxième alésage, l'interface entre la première partie d'extrémité et le deuxième alésage ayant une longueur axiale (62) ;
un élément de retenue (60) s'étendant sur 360 degrés autour de l'interface ; et
un élément d'étanchéité (68) s'étendant sur 360 degrés autour de l'interface ;
dans lequel l'élément de retenue recouvre une première partie (64) de la longueur axiale de l'interface,
dans lequel l'élément d'étanchéité recouvre une deuxième partie (66) de la longueur axiale de l'interface, et
dans lequel le corps cylindrique inclut un diamètre constant qui recouvre la première partie et la deuxième partie, **caractérisé en ce que** la première partie (64) est plus proche que la deuxième partie (66) d'un centre du corps cylindrique (70).

6. Ensemble chaîne selon la revendication 5, dans lequel l'élément de retenue est une surface rugueuse.

7. Ensemble chaîne selon la revendication 6, dans lequel l'élément d'étanchéité est une surface lisse.

8. Ensemble chaîne selon la revendication 5, dans lequel le raccord de maillon de chenille comprend en outre un réservoir de fluide (74) formé dans celui-ci.

9. Ensemble chaîne selon la revendication 8, dans lequel l'élément d'étanchéité est configuré pour empêcher le fluide de fuir du réservoir de fluide par le biais de l'interface.
